# EUROPEAN PATENT APPLICATION

(11) **EP 1 347 552 A2**
(43) Date of publication of application: **24.09.2003**
(21) Application number: 03251280.8
(22) Date of filing: 04.03.2003
(51) Int. Cl.: H02J 3/18

(54) **Reactive power control**

(30) Priority: 18.03.2002 GB 0206368
(71) Applicant: Goodrich Actuation Systems Ltd, Luton, Bedfordshire LU1 3LU (GB)
(72) Inventor: Trainer, David Reginald, Stafford ST16 3JL (GB); Taha, Mohamad Hussein, Edgware, Middlesex HA8 5RP (GB); Whitley, Christopher Richard, Wednefield, Wolverhampton WV11 1RF (GB)
(74) Representative: Beck, Simon Antony

(57) **Abstract**

A reactive power compensator is provided which uses a power converter to deliberately draw or supply out of phase currents such that these can develop voltage drops of a desired phase angle across the reactance of a cable, to improve the total voltage loss and/or system power factor.

## Description

The present invention relates to a method of and apparatus for providing reactive power compensation, and in particular for providing power factor correction and/or voltage compensation in power distribution systems where imaginary (reactive) impedances are significant.

There is a growing trend in the aerospace industry to move away from the use of continuously variable transmissions that have previously been used to drive an AC generator at a constant speed from the varying speed of the aircraft engines. This is to reduce weight and improve reliability of the aircraft. The growing trend is towards connecting the AC generator to the aircraft engine, via a direct connection or a fixed ratio transmission, thus resulting in the generator providing a variable frequency supply. Aircraft power systems are therefore now operating at a variable frequency over a typical frequency range of 350 Hz to 800 Hz.

In comparison to the operating frequencies of land based power systems, normally 50-60 Hz, the operation of aircraft power systems at the relatively high frequencies stated above presents some technical difficulties. One such difficulty of major importance in the aerospace industry is associated with the inductance, or more correctly the reactance, of the potentially long cables (which may run along part of the wing and a large proportion of the fuselage) that connect electrical loads, such as electric actuators for aircraft flight surfaces, to the AC supply, or "point of regulation" (POR). In large modern aircraft these cables can be in excess of 200 ft and contribute an impedance that is dependent on the cable's inductance and resistance. The inductive reactance, X_{L}, is proportional to the operating frequency of the power system and is given by X_{L} = 2πfL, where f is the operating frequency and L is the inductance of the cable. As the connected load draws a current, the cable develops a voltage drop due to its impedance which is out of phase with respect to the voltage at the POR and has two detrimental effects:
a) The voltage at the load is reduced below the regulated voltage at the point of regulation which is usually at the generator output; and
b) The power factor of the load seen at the point of regulation reduces (even for a purely resistive load).

The voltage drop across the cable is disadvantageous. Either the drop is tolerated and the connected load or loads have to be correspondingly downrated for the lower received voltage, or the voltage drop across the length of the cable is not allowed to exceed a threshold and it is necessary to provide cables that are both large and heavy such that their resistance remains low. Clearly space and weight are at a premium in aerospace applications.

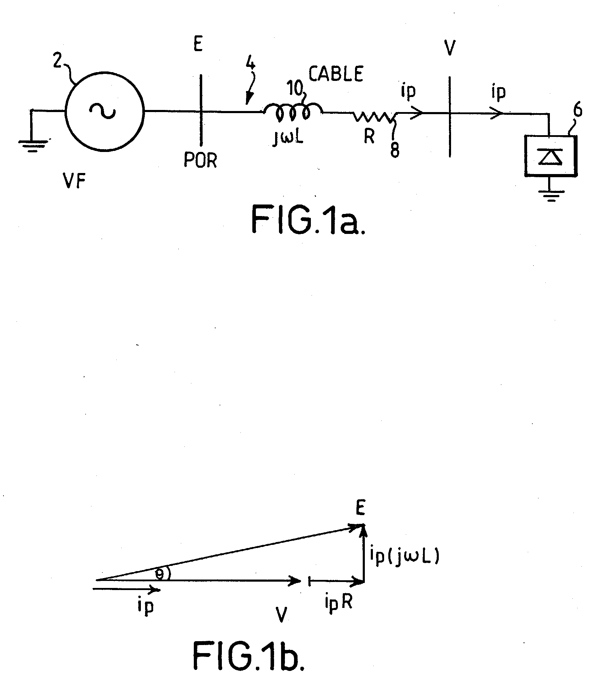

This problem can be further explained with reference to Figures 1a and 1b. Figure 1a shows a basic circuit diagram for a typical electric actuator load with a power converter represented by a diode rectifier input typically used to drive such an electric actuator. A variable frequency AC supply 2 is connected to a first end of a cable 4. The point of connection between the AC supply and the cable 4 is the point of regulation (POR) and the voltage at this point is denoted by E. Connected to the second end of the cable 4 is the load, represented in Figure 1a by a diode rectifier 6. The voltage at the point of connection between the load and the cable 4 is denoted by V. The diode rectifier 6 usually presents an almost purely resistive load at the point of connection irrespective of the nature of the actuator connected to it. However, the cable 4 has both resistance R, represented by resistor 8, and reactance jωL, represented by inductor 10. As is conventional, j signifies an imaginary number, and ω = 2πf.

Figure 1b shows the phasor diagram corresponding to Figure 1a. This shows that there is a voltage drop across cable 4 due purely to the resistor 8 represented by the phasor iₚR where Iₚ is the current flowing and also a voltage drop of iₚ(jωL) due to the inductor 10 that is 90° out of phase with respect to the resistive voltage drop. It is therefore possible to see that the voltage V at the point of connection to the load 6 lags behind the supply voltage E by phase angle θ and has a magnitude V that is less than that of the supply E. Since ω = 2π f, as the frequency f rises the voltage drop due to the reactance of the cable becomes more significant and results in an increasing phase angle θ and (since E is fixed) a reduction in the voltage V. It will also be appreciated that the resistive voltage drop varies as a function of the current drawn by the load and hence there is no simple relationship between E and V.

One known solution to this problem is to connect a capacitor at the point of connection of the load. The capacitor can be sized so as to introduce a reactive current leading the voltage which substantially cancels the inductive current lagging the voltage, thereby reducing the phase angle θ. The beneficial effects are limited since the capacitive compensation provided is controlled by the supply voltage and frequency rather than the requirements of the load. Thus the cancellation may be too little or in some instances may be too much giving an undesirable leading power factor. The problem therefor remains of providing controlled reactive power compensation for AC systems with varying loads and supply frequencies.

According to a first aspect of the present invention there is provided a method of providing reactive power compensation, the method comprising providing a controllable converter connected to an AC supply via a cable having some reactance and controlling the converter so as to draw or supply reactive current from or to the AC supply, in order to control the power factor at the AC supply such that it remains within a desired range.

According to a second aspect of the present invention there is provided a method of providing voltage compensation, the method comprising providing a controllable converter connected to an AC supply via a cable having some reactance and controlling the converter so as to draw or supply reactive current from or to the AC supply, so as to control the voltage at the AC supply or at the load to within a predetermined range.

It is therefore possible to provide a method of varying the reactive current conducted along a cable having reactive and resistive properties by controlling the operation of a controllable converter to thereby vary either the voltage difference across the cable (and hence the load voltage) or the power factor as seen at the supply side of the cable.

It will be appreciated that although power is usually consumed by a load, some motor loads may be back driven during use, for example because of aerodynamic loading, and may act temporarily as generators. It is undesirable for this regenerated energy to accumulate within the load equipment since it can lead to damaging electrical and thermal stresses. Typically such events have been catered for by using internal dump loads to dissipate energy. However the provision of these dump loads incurs a weight penalty. The inventor has realised that if the current produced by an actuator when being temporarily back driven is introduced onto the aircraft bus with an appropriate phase shift, the dump loads can be eliminated or reduced in power handling capacity, thereby providing a weight saving.

Preferably, the AC supply is provided by an AC generator. Preferably, the power factor at the AC supply is controlled to be within a range stipulated by the generator manufacturer, or equally within a range stipulated by the generator user.

The AC supply is preferably a variable frequency supply.

Preferably, the voltage difference across the cable is controlled to be within a range defined by either the current carrying ability of the cable or a desired voltage at the converter.

Preferably, the method comprises determining the reactive current to be drawn from or supplied to the AC supply dependent on one or more known parameters of the cable. The known parameters may include at least the resistance and reactance, such as inductance of the cable. The reactive current may also be determined as a function of the frequency of the AC supply and, alternatively or additionally, the desired voltage at the converter. Preferably, the required reactive current is determined in accordance with a power calculation function.

Additionally or alternatively, the reactive current to be drawn from or supplied to the AC supply is derived using a closed loop control system that compares at least one measured value with a demanded value. Preferably, the power factor at the AC supply is compared with a demanded power factor value. Additionally or alternatively, the voltage at the converter is compared with a demanded voltage value. A combination of open loop and closed loop control may be used.

The method may be applied to a single phase supply or a polyphase supply.

The converter may be controlled by an integrated or a separate controller. In one embodiment of a controller, a difference between a measured voltage at the load end of the cable (or internally to the converter) may be compared with a target voltage so as to derive a voltage error. The voltage error may then be processed, for example using a function including at least one of an integral and proportional term to provide a first demand signal. The first demand signal may be representative of the out of phase (quadrature) current that needs to flow or of the change in out of phase current that needs to flow in order to hold to voltage at the load end of the cable within a predetermined range.

The converter may also include a further feedback loop for holding a DC link voltage within the converter within a predetermined range.

The feedback loops may be interrelated and in particular the feedback loop compensating for DC link voltage may also take account of resistive voltage drop within the cable as a result of current flow.

According to a third aspect of the present invention there is provided an apparatus for reactive power compensation comprising a converter arranged to be connected to a variable frequency AC supply via a cable having some reactance and resistance and a converter controller arranged to control the converter so as to draw or supply reactive current from or to said AC supply, whereby the power factor at the AC supply and/or the voltage at a desired point of the cable is maintained within a predetermined range.

Preferably the controller is arranged to maintain the voltage at the load end of the cable within a predetermined range.

Advantageously the controller can also control the supply of current to the generator from the load under transient conditions in which the load is back driven and acts as a generator. By appropriate phasing of the current, the regenerated power can be passed on to the AC power bus in order to simplify the system and improve efficiency.

Preferably, the converter comprises a plurality of controllable switches, for example one pair per phase, arranged to be operated in response to control signals from the converter controller. The switches are preferably semiconductor switches, for example power transistors.

Preferably, the converter comprises a rectifier-inverter. Alternatively the converter may comprise a matrix converter.

Embodiments of the present invention are described herein, by way of example only, with reference to the accompanying drawings, in which:
Figure 1a schematically illustrates a resistive load connected to an AC supply via a resistive and reactive cable;
Figure 1b shows the phasor diagram for the current and voltages in the circuit of Figure 1a;
Figure 2 schematically illustrates the circuit arrangement of an active rectifier - inverter;
Figure 3 schematically illustrates the circuit arrangement of a matrix converter;
Figure 4a schematically shows an active converter connected to an AC supply via a reactive link having a reactive impedance;
Figure 4b shows the phasor diagram corresponding to the circuit shown in Figure 4a;
Figure 5 schematically shows an open loop reactive power compensation system according to an embodiment of the present invention;
Figure 6 schematically shows a closed loop reactive power compensation system according to an embodiment of the present invention; and
Figure 7 shows a simulation comparing the effects of no reactive power correction and implementation of such a correction.

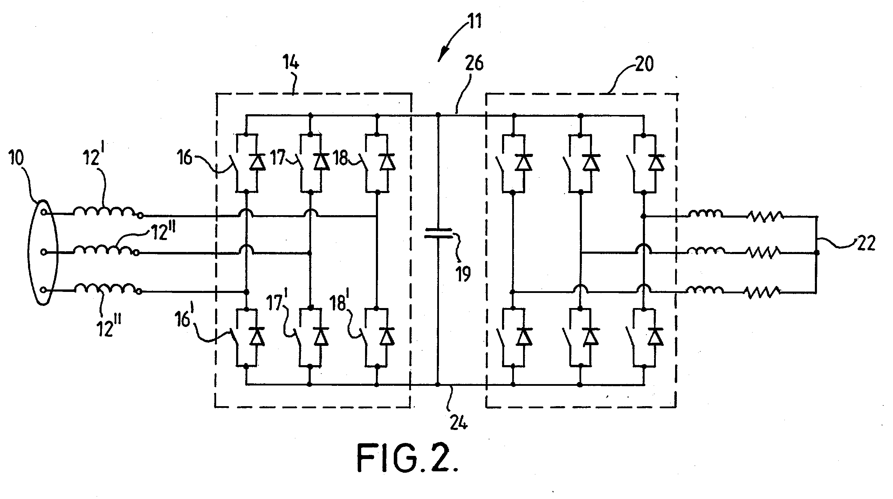

It is increasingly common in aerospace applications to use electric actuators utilising AC or DC motors, as opposed to purely hydraulic actuators, for the control of movable elements, such as flight control surfaces. The electric actuators may act directly on an aircraft surface, or may be in the form of electro-hydraulic actuators where an electric motor pressurises hydraulic fluid for use in an associated hydraulic actuator. Accordingly, increasingly sophisticated motor-drives are being used to control the electric actuators. One such suitable motor controller, generally indicated 11, is shown in Figure 2. The variable frequency AC supply 10 is connected via a buffer inductor 12', 12" and 12"' for each phase to a rectifier section 14 of the motor controller. A first phase of the AC supply is connected to the mid point of two semiconductor switches 16 and 16' connected in series. The second phase of the supply is connected to the midpoint of two further semiconductor switches 17 and 17', with the third phase of the supply similarly connected to a further pair of semiconductor switches 18 and 18'. The three pairs of semiconductor switches are connected in parallel between supply rails 24 and 26. Each semiconductor switch has a diode connected in parallel across it which serves as a freewheeling diode. Typically, the semiconductor switches are insulated gate bipolar transistors (IGBT). Connected across the three pairs of semiconductor switch and diode pairs is a capacitor 19 across which a DC voltage is generated. By controlling the switching of the semiconductor switches within the rectifier section 14 in a known manner, the magnitude of the DC voltage across the capacitor 19 can be varied. It is known that the switches 16, 17, 18, 16', 17' and 18' of the rectifier section are switched in a pulse width modulated manner to control the flow of current from each phase of the supply. The inductors 12', 12" and 12"' limit the rate of build and decay of current such that a reasonably smoothly changing current wave form can be generated. The pulse width modulation as described in the prior art is used to synthesise a sinusoidal current flow with the current being completely in phase with the supply voltage such that the converter appears as a purely resistive load.

Also connected in parallel across the capacitor 19 is an invertor section 20 comprising an identical arrangement of semiconductor switch and diodes as that in the rectifier section 14. By controlling the semiconductor switches within the inverter section 20 in a known manner, it is possible to generate a three phase alternating supply output. Each of the semiconductor switch pairs generate one of the three phases by switching the DC voltage according to a Pulse Width Modulation (PWM) scheme, with the switched voltage across one of the switches in each pair providing the positive half of the AC cycle and the other switch the negative half. The switching is time delayed with respect to each pair of switches to establish the correct phase angle between each phase. The inverter can synthesise an AC wave form of almost any desired frequency and consequently the circuit of Figure 2 can perform AC to AC frequency conversion if required.

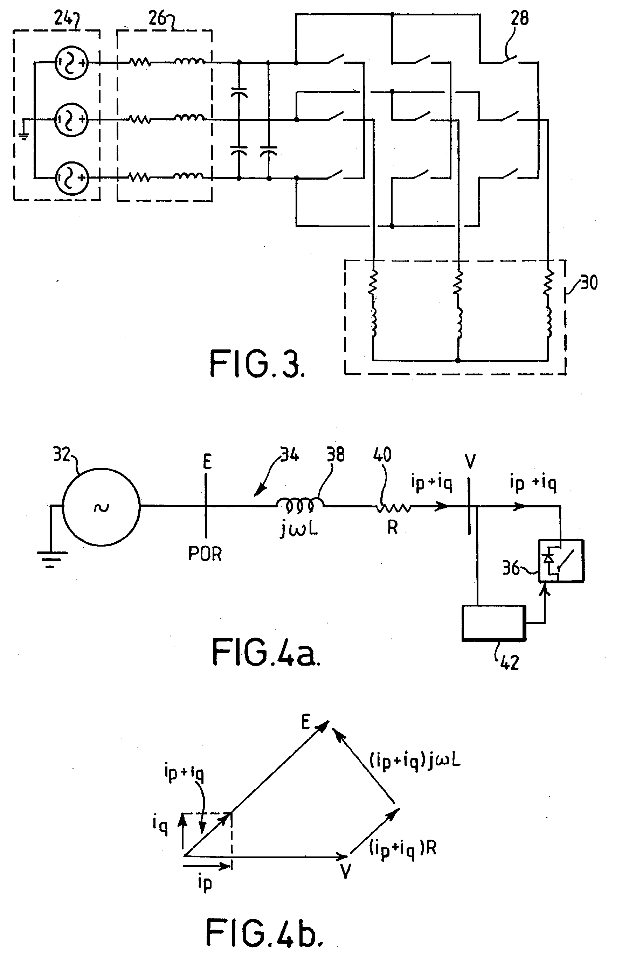

An alternative motor drive is shown in Figure 3 and is termed a matrix converter. Figure 3 shows an AC supply of variable frequency 24 connected via a three phase cable 26 to a matrix converter. A matrix converter comprises a matrix of semiconductor switches 28 that under suitable control are arranged to connect the various input phases together to generate a three phase alternating output, which in Figure 3 is shown connected to a load 30. Matrix converters of the type shown in Figure 3 are also referred to as direct AC-AC frequency changer circuits because there is no intermediate DC element generated.

Both the motor controller and matrix converter of Figures 2 and 3 respectively are useful in systems with a variable frequency AC supply because they can be controlled to provide an AC output having either a fixed or variable frequency. As noted hereinbefore, it is currently known to operate the systems at unity power factor. That is to say, that by suitably controlling the switching of the semiconductor switches via the PWM scheme, the current drawn by the system is controlled such that it is in a fixed phase relationship to the voltage. Hence, the systems appear as purely resistive loads to the rest of the electrical system.

In embodiments of the present invention, the ability to control the reactive currents drawn by such motor drives is exploited to provide compensation for the reactive element of the cable connecting the point of regulation with the motor drives and thus loads. Figure 4a shows a basic circuit diagram for an electric actuator load supplied by a controlled converter. The AC supply 32 is connected via a cable 34 to the input of a converter 36. The cable 34 is represented by a pure inductor 38 and a pure resistor 40. Although only a single cable is illustrated, it will be appreciated that the AC supply is 3-phase. The converter 36 is controlled so as to draw both a real current iₚ and a reactive current i_{q} by varying the PWM scheme so as to introduce a phase angle between the voltage wave form at the converter and the current drawn by the converter.

Figure 4b shows the phasor diagram for the circuit shown in Figure 4a. The voltages dropped across the resistor 40 and inductor 38 now have both a real and reactive element and their phases are correspondingly altered. By appropriate selection of the magnitude of the reactive current i_{q}, it can be seen from Figure 4b that not only is the resultant current iₚ + i_{q} in phase with the AC supply at the point of regulation, i.e. the power factor at the point of regulation is substantially unity, the magnitude of the voltage V at the point of connection to the active converter 36 is substantially equal to the magnitude of the output voltage E of the AC supply. Hence not only has the power factor as seen at the point of regulation improved, but the voltage dropped across the reactive link 34 has been substantially reduced, thereby allowing smaller and lighter cables to be utilised for any given load.

Because the effects are proportional to the load current flowing through the reactive impedance of the cable and the AC supply frequency, the reactive power compensation provided by the converter also needs to be variable. This is provided by varying the switching of the semiconductor switches 16. As mentioned, Figure 4b shows that the voltage magnitude at the load can be made substantially the same as that at the point of regulation. It could be beneficial in some applications to boost the input voltage by increasing the reactive power compensation provided by the active converter. This is particularly relevant to the matrix converter, where at present the output voltage of the converter is restricted to approximately 87% of the input voltage. The voltage "loss" with respect to the point of regulation can therefore be effectively improved.

Additionally, under transient conditions where over voltages may be present i.e. the voltage magnitude at the load is greater than the AC supply voltage, operation of the active converter at a large lagging power factor can be beneficial in reducing the apparent AC system voltage thus protecting components from over voltage damage.

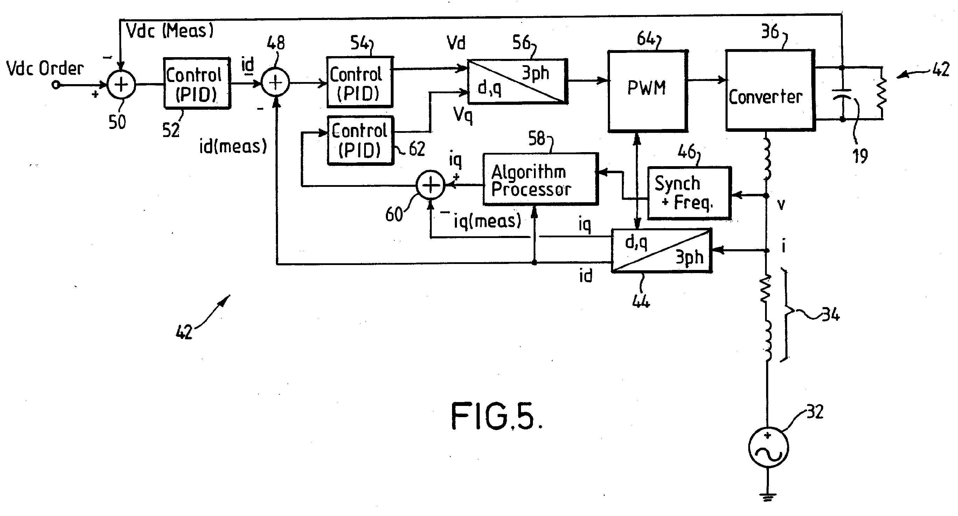

Figure 5 shows a hardware schematic of an open loop control system for controlling the switching of the converter according to an embodiment of the present invention. An AC supply 32 is connected via a cable 34 to a converter 36. Measured values of the currents in each of the phases at the load end of the cable 34 are input to a current transformation block 44 within a converter controller, generally indicated as 42, that transforms the 3-phase current signals into equivalent DC signals using 3-phase to 2-phase (D&Q) mathematical transformation techniques to derive the inphase and quadrature currents. The phase angle and frequency of the voltage of the 3-phase signals is also measured by a phase and frequency block 46, the output of which is input to the current transformation block 44. Because the 3-phase to 2-phase mathematical transformations are performed with knowledge of the phase angle and frequency of the input voltage and current signals, the D&Q outputs relate to the real and reactive components respectively. The real current value i_{d} is input to an inverting input of an adder 48. The output of the converter 36 is connected to a load 42, via the DC link capacitor 19. The DC voltage across the capacitor 19 is measured and input to an inverting input of a summation block 50, which also receives at a non-inverting input thereof a DC reference voltage (V_{dc} order), to derive an error signal. This error signal is applied to a first control function, for example a proportional integral differential (PID) controller 52, to derive a real current demand i_{d}. The real current demand is compared with the measured real current value derived from the 3-phase to DQ transformation at the summation block 48. The output of the summation block 48 is therefore a real current error value and supplied to a first input of a second control function 54 to provide a real voltage value V_{d} that is applied to a DQ to 3-phase (reverse) transformation block 56. The measured real current value from the 3-phase to DQ transformation block 44 is also input to an data processor 58, which also receives as an input the phase and frequency signals from the phase and frequency detection block 46.

The data processor 58 has been given prior knowledge of the resistance and inductance of the cable 34 and uses this to perform phasor like calculations of the type shown in Figure 4b together with knowledge of the measured current value and power system frequency to calculate the required reactive current i_{q} demand. This is compared with the measured value of reactive current supplied as a second output from the 3-phase to DQ transformation block 44 to derive an reactive current i_{q} error signal at summation block 60. This reactive current error signal is input to a further PID controller 62 to provide a reactive voltage term V_{q} that is also applied to the DQ to 3-phase transformation block 56. The output from the DQ to 3-phase transformation block provides alternating waveforms that are used by a pulsewidth modulation block to provide switching signals that are input to the active converter 36.

The circuit shown in Figure 5 requires knowledge of the reactive and resistive properties of the cable 34 in order to establish the algorithm run by algorithm processor 58. The control circuit responds to alter both the real current and reactive current drawn by the active converter 36 by altering the switching angles and times of the semiconductor switches within the converter.

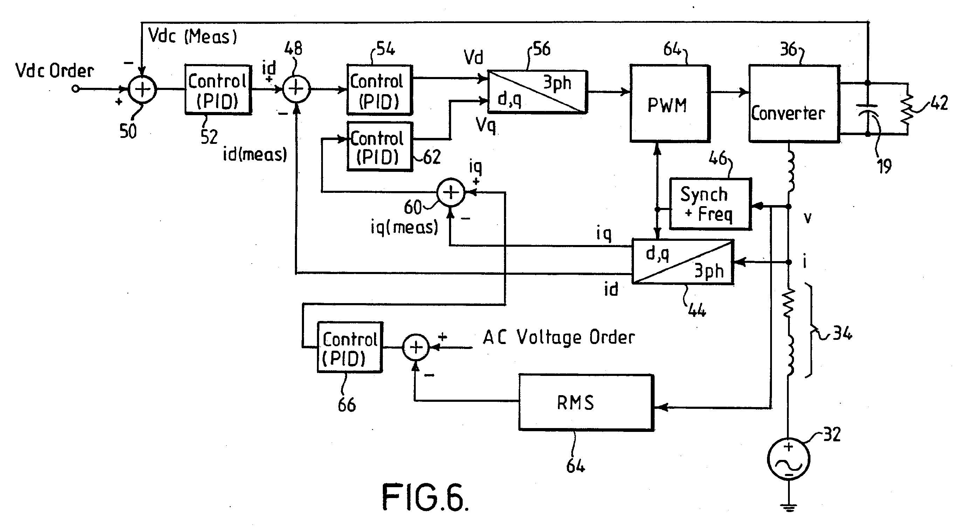

Figure 6 shows a further embodiment of the present invention in which a control system having closed loop control is provided. Where applicable, like features are given like reference numerals to Figure 5. In this closed loop system, the arrangement for determining the real current value is as previously described with reference to Figure 5. However, the measured real current is no longer input to a data processor implementing an open loop reactive power control algorithm. Instead, the AC supply voltage measured at the input to the phase and frequency block 46 is also input to a RMS detector 64, the output of which is compared with a demanded AC voltage to provide an AC error signal. The AC error signal is input to a further PID controller 66 to derive a reactive current demand i_{q} that is compared with the measured reactive current at the summation block 60. The required reactive voltage V_{q} is then derived in the same manner as described with respect to Figure 5.

Using embodiments of the present invention it is therefore possible to provide reactive power compensation that allows both the power factor at the point of regulation to be controlled and the voltage dropped across the reactive cable connecting the AC supply to the load to be minimised.

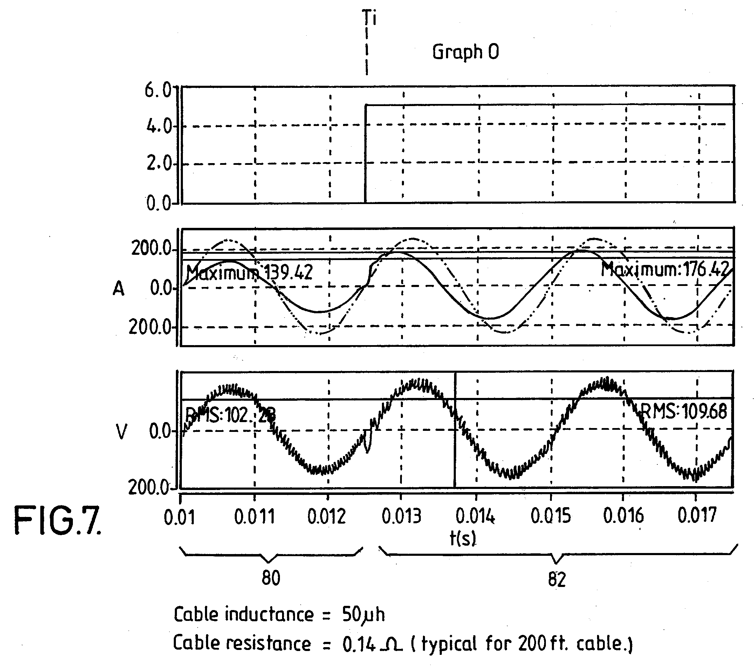

Figure 7 schematically illustrates voltage and current wave forms appearing at the load end of the cable having an inductance of 50 micro Henry and a resistance of 0.14 Ohms, and where the load is simulated to be 6 Ohms, the DC power supplied is 26.6 kW, the AC frequency is 400 Hz and the power factor is 0.88. Under these conditions, as shown in the portion denoted 80 of the graphs, the current and voltage are in-phase and the RMS voltage is approximately 102 volts. At time T1, a reactive power demand is instigated by the controller and in the second portion of the graph, generally labelled 82 it can be seen that a phase shift has now occurred between the current and the voltage with the peak current increasing from 139 to approximately 176 amps, and the RMS voltage increasing from 102 to 109.6 volts. It is thus possible, by forcing the flow of an out of phase current, to reduce the apparent voltage drop seen across a cable. Thus, for a given voltage drop the cable can be thinner and lighter.

## Claims

1. An apparatus for providing reactive power compensation, **characterised by** a converter (36) connected to a variable frequency AC supply (32) via a cable (34) having a reactance, and a converter controller (42) arranged to control the converter (36) so as to draw reactive current from or supply reactive current to the AC supply, whereby a power factor at the AC supply (32) and/or a voltage (E, V) at a predetermined point of the cable (34) is maintained within a predetermined range.

2. An apparatus as claimed in claim 1, **characterised in that** the converter controller (42) is arranged to maintain the voltage (V) at a load served by the cable or at an input to the converter within a predetermined range.

3. An apparatus as claimed in claim 1 or 2, **characterised in that** the generator is a variable frequency generator.

4. An apparatus as claimed in any one of the preceding claims, **characterised in that** the converter controller (42) calculates the reactive current to be drawn or supplied by the converter (36) on the basis of voltage at the load or at an input to the converter and knowledge of the cable properties, and generator frequency.

5. An apparatus as claimed in any one of claims 1 to 3, **characterised in that** the converter controller (42) causes the converter to perform closed loop control based on a difference between a measured voltage and a target voltage.

6. An apparatus as claimed in any one of claims 1 to 3 **characterised in that** the converter controller (42) controls the converter (36) based on the difference between a measured power factor at the AC supply and a demanded power factor value.

7. An apparatus as claimed in any one of the preceding claims, **characterised in that** the converter operates with a poly-phase AC supply.

8. An apparatus as claimed in any one of the preceding claims, **characterised in that** the converter (36) is a rectifier, a rectifier inverter or a matrix converter.

9. An apparatus as claimed in any one of the preceding claims, **characterised in that** the apparatus is operable to back drive the generator with current from a back driven actuator.

10. An apparatus as claimed in claim 9, **characterised in that** the back driven current is phase shifted.

11. An aircraft including an AC generator, a cable, a converter and a load, wherein the AC generator is a variable frequency generator and provides power to the load via the cable (34) and the converter (36), and wherein the cable has a reactance, and a converter controller (42) is arranged to control the converter (36) so as to draw current from or supply current to the AC supply such that a power factor at the AC supply or a voltage at the load end of the cable is maintained within a predetermined range.

12. A method of providing reactive power compensation, **characterised in that** the method comprises providing a controllable converter (36) connected to an AC supply (32) via a cable (34) having some reactance, and controlling the converter so as to draw reactive current from or supply reactive current to the AC supply in order to control a power factor at the AC supply, a voltage (E) at the AC supply, or a voltage (V) at the converter, such that it remains within a predetermined range.

13. A method as claimed in claim 12, **characterised in that** the AC supply (32) is a variable frequency AC generator.

14. A method as claimed in claim 12 or 13 **characterised in that** the method further comprises determining the reactive current to be drawn or supplied by the converter based on the reactance of the cable (34) and at least one of a frequency of the AC supply (32) and a desired voltage (V) at the converter (36).

15. A method as claimed in claim 12 or 13, **characterised in that** the method further comprises determining the reactive current to be drawn or supplied by using a closed loop control system to compare the power factor at the AC supply (32) with a desired power factor.

16. A method as claimed in claim 12 or 13, **characterised in that** the method further comprises determining the reactive current to be drawn or supplied by using a closed loop control system to compare the voltage (V) at an input to the converter (36) with a desired voltage.

17. A method as claimed in claim 16, **characterised in that** the comparison produces a voltage error value which is processed using a function including at least one of an integral and proportional term, to provide a signal which is indicative of a reactive current required in order to hold the voltage (V) at the converter (36) within a predetermined range.

18. A method as claimed in any one of claims 12 to 17, **characterised in that** the AC supply (32) is a polyphase supply.

19. A method as claimed in any one of claims 12 to 18 **characterised in that** the converter controller includes a feedback loop for holding a DC link voltage within the converter within a predetermined range.

20. A converter controller for controlling a converter to draw or supply reactive current from or to a cable such that, in use, a voltage at an input to a converter controlled by the converter controller or a power factor of a generator supplying power to the converter remains within a predetermined range.
